# EUROPEAN PATENT APPLICATION

(11) **EP 3 779 820 A1**
(43) Date of publication of application: **17.02.2021**
(21) Application number: 19191632.9
(22) Date of filing: 14.08.2019
(51) Int. Cl.: G06Q 10/10

(54) **MESSAGE DELIVERY**

(71) Applicant: Nokia Technologies Oy, 02610 Espoo (FI)
(72) Inventor: WRIGHT, Christopher, 1015 Lausanne (CH); BEARD, Timothy, Cambridge, CB4 3HJ (GB); DUFFY, David, Cambridge, CB1 3SB (GB)
(74) Representative: Nokia EPO representatives

(57) **Abstract**

An apparatus, method and computer program for receiving a first message, wherein the first message is sent by a sender to a recipient; determining a plurality of locations of the intended recipient, wherein the plurality of locations comprise at least a current location and one or more predicted future locations of the recipient; obtaining location feature data for one or more locations of the plurality of locations of the recipient; and determining at least one message delivery location for the first message based on at least a message intent of the first message and the location feature data, wherein the at least one message delivery location is selected from the plurality of locations of the recipient.

## Description

### Field

The present specification relates to message delivery locations.

### Background

Messages may be delivered to recipients almost immediately after the message is sent by the sender, however, this is not the only possible approach. There remains a need for further improvements in this field.

### Summary

In a first aspect there is provided an apparatus comprising: means for receiving a first message, wherein the first message is sent by a sender to a recipient; means for determining a plurality of locations of the intended recipient, wherein the plurality of locations comprise at least a current location and one or more predicted future locations of the recipient; means for obtaining location feature data for one or more locations of the plurality of locations of the recipient; and means for determining at least one message delivery location for the first message based on at least a message intent of the first message and the location feature data, wherein the at least one message delivery location is selected from the plurality of locations of the recipient.

Also disclosed is an apparatus comprising at least one processor; and at least one memory including computer program code, the at least one memory and the computer program configured, with the at least one processor, to cause the performance of the apparatus to: receive a first message, wherein the first message is sent by a sender to a recipient; determinine a plurality of locations of the intended recipient, wherein the plurality of locations comprise at least a current location and one or more predicted future locations of the recipient; obtain location feature data for one or more locations of the plurality of locations of the recipient; and determine at least one message delivery location for the first message based on at least a message intent of the first message and the location feature data, wherein the at least one message delivery location is selected from the plurality of locations of the recipient.

In a second aspect there is provided a method comprising: receiving a first message, wherein the first message is sent by a sender to a recipient; determining a plurality of locations of the intended recipient, wherein the plurality of locations comprise at least a current location and one or more predicted future locations of the recipient; obtaining location feature data for one or more locations of the plurality of locations of the recipient; and determining at least one message delivery location for the first message based on at least a message intent of the first message and the location feature data, wherein the at least one message delivery location is selected from the plurality of locations of the recipient.

In a third aspect there is provided a computer program comprising instructions for causing an apparatus to perform at least the following: receive a first message, wherein the first message is sent by a sender to a recipient; determine a plurality of locations of the intended recipient, wherein the plurality of locations comprise at least a current location and one or more predicted future locations of the recipient; obtain location feature data for one or more locations of the plurality of locations of the recipient; and determine at least one message delivery location for the first message based on at least a message intent of the first message and the location feature data, wherein the at least one message delivery location is selected from the plurality of locations of the recipient.

Also dislosed is a computer readable medium having stored thereon computer-readable instructions for determining a plurality of locations of the intended recipient, wherein the plurality of locations comprise at least a current location and one or more predicted future locations of the recipient; means for obtaining location feature data for one or more locations of the plurality of locations of the recipient; and means for determining at least one message delivery location for the first message based on at least a message intent of the first message and the location feature data, wherein the at least one message delivery location is selected from the plurality of locations of the recipient.

### Brief description of the drawings

Example embodiments will now be described, by way of example only, with reference to the following schematic drawings, in which:
FIG. 1 is a block diagram of an example message delivery system;
FIG. 2 is a block diagram of a message delivery system in accordance with an example embodiment;
FIGS. 3 and 4 are flowcharts showing algorithms in accordance with example embodiments;
FIGS. 5 to 7 are block diagrams of systems in accordance with example embodiments;
FIG. 8 is a flowchart showing an algorithm in accordance with example embodiments;
FIGS. 9 to 13 are block diagrams of systems in accordance with example embodiments;
FIG. 14 is a block diagram of components of a system in accordance with an exemplary embodiment; and
FIGS. 15A and 15B show tangible media, respectively a removable non-volatile memory unit and a compact disc (CD) storing computer-readable code which when run by a computer perform operations according to example embodiments.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

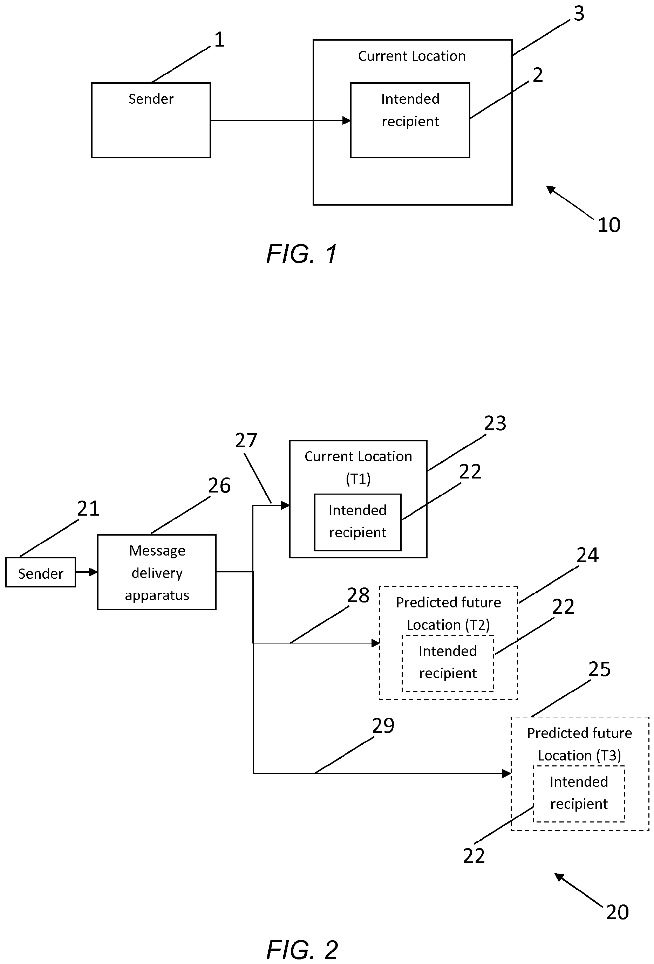

FIG. 1 is a block diagram of an example message delivery system, indicated generally by the reference numeral 10. Message delivery system 10 comprises a sender 1 and an intended recipient 2, where the sender 1 may send a first message to the intended recipient 2. For example, the intended recipient 2 is in the current location 3 when the sender sends a message to the intended recipient 2. In normal circumstances (i.e. both the sender 1 and the intended recipient 2 have devices that are on and connected to a network), the first message may be delivered to the intended recipient 2 almost instantaneously, i.e. when the intended recipient 2 is still in the current location 3. However, in some examples, when the intended recipient 2 is at the current location 3, it may not be ideal or appropriate for the intended recipient 2 to receive the first message. For example, when a recipient is at work, the recipient may not want to receive any messages related to his/her personal life unless it is an emergency.

FIG. 2 is a block diagram of a message delivery system, indicated generally by the reference numeral 20, in accordance with an example embodiment. Message delivery system 20 comprises a sender 21, a message delivery apparatus 26, and an intended recipient 22. The intended recipient 22 may receive messages at a first recipient device. The intended recipient 22 may be at a current location 23 at a current time T1. The intended recipient 22 may be predicted to be at a first predicted future location 24 at a future time T2 (where time T2 is after time T1), and the intended recipient 22 may be predicted to be at a second predicted future location 25 at a future time T3 (where time T3 is after time T2). When the sender 21 sends a message to the intended recipient 22 through the message delivery apparatus 26: the message delivery apparatus 26 may deliver the message to the intended recipient 22 at time T1 using option 27, the message delivery apparatus 26 may deliver the message to the intended recipient 22 at time T2 using option 28, or the message delivery apparatus 26 may deliver the message to the intended recipient 22 at time T3 using option 29. The message delivery apparatus 26 may, for example, determine a message delivery location, where the message delivery location is selected from the current location 23, the first predicted future location 24, and the second predicted future location 25. In option 27, the intended recipient 22 receives the message when the intended recipient is at the current location 23; in option 28, the intended recipient 22 receives the message when the intended recipient 22 is at the first predicted future location 24; and in option 29, the intended recipient 22 receives the message when the intended recipient 22 is at the second predicted future location 25.

In an example embodiment, the message is not sent to the first recipient device (used by the intended recipient 22) until the intended recipient 22 is in the selected message delivery location. For example, the message may be queued at the sender's device, and/or may be queued at a server between the sender's device and the first recipient device. When the intended recipient is in the selected message delivery location, the message may be released from the queue at the sender's device or at the server. In another example, the message is delivered to the first recipient device whenever the message is sent by the sender, but the message is hidden on the first recipient device, and not displayed or notified to the intended recipient 22 until the intended recipient 22 is in the selected message delivery location. When the intended recipient 22 is in the selected message delivery location, the intended recipient may receive a notification that the message has been received. In another example, the message may be delivered to the first recipient device whenever the message is sent by the sender, and the message may also be available to be viewed by the intended recipient 22 if the intended recipient 22 deliberately opens an application corresponding to the message in order to view the message. However, notifications for the message being received are not shown at the first recipient device until the intended recipient 22 is in the selected message delivery location.

In an example embodiment, message delivery location may be selected from any predicted future location, regardless of a time at which the intended recipient 22 is at the predicted future location. For example, the intended recipient 22 may have a habit of visiting a beach a few times in a week, and therefore the beach may be one of the predicted future locations. The time or frequency at which the intended recipient 22 visits the beach may be variable. For example, the intended recipient 22 sometimes visits the beach once in a week, and sometimes five days a week; or the intended recipient 22 sometimes visits the beach in the morning, and sometimes in the evening. The beach may therefore be one of the predicted future locations, even though the time at which the intended recipient 22 is predicted to be at the beach may not be known. The beach (predicted future location) may be selected as the message delivery location. When the beach is the selected message delivery location, the message may be delivered to the intended recipient 22 when the intended recipient 22 is at the beach. In an example, a delivery time limit may be specified, such that if the intended recipient 22 is not at the selected message delivery location (e.g. the beach) within the delivery time limit, the message may be delivered to the intended recipient 22 before the delivery time limit ends. In such case, the message may be delivered even if the intended recipient 22 is not at the beach.

In an example embodiment, a delivery time limit may be specified, such that the first message may be delivered to the intended recipient 22 before the delivery time limit ends. The delivery time limit may be specified by the sender 21, by the intended recipient 22, or may be a default delivery time limit of the message delivery apparatus 26 or any other element or entity of the message delivery system 20. The other elements or entities of the message delivery system 20 may include one or more of a service provider that handles the messaging from the sending and/or receiving side, a network provider, a device used by the sender 21, and/or a device used by the intended recipient 22. The one or more predicted future locations may then be determined according to the delivery time limit, such that the predicted future locations include only predicted future locations at which the intended recipient 22 is predicted to be before the delivery time limit ends. This may ensure that the message is delivered to the intended recipient 22 (eventually).

In an example embodiment, a delivery time limit may not be specified, such that if the intended recipient 22 does not visit a selected message delivery location, the message is not delivered to the intended recipient 22. For example, if a message is related to local food available in the selected message delivery location, it may be desirable to deliver the message to the intended recipient 22 only if the intended recipient 22 visits the message delivery location. If the intended recipient 22 does not visit the message delivery location, receiving a message related to local food in the message delivery location may not be useful.

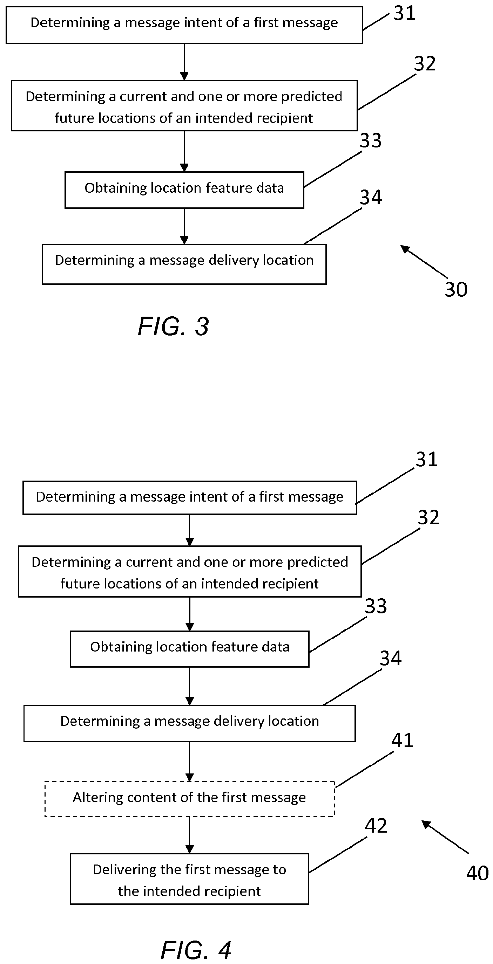

FIG. 3 is a flowchart of an algorithm, indicated generally by the reference numeral 30, in accordance with an example embodiment. The operations of algorithm 30 may be performed at the message delivery apparatus 26. At operation 31, a first message is received. The first message (for example, a text, an image, a video, or some other form of a message) may be sent by the sender 21 to the intended recipient 22. At operation 32, a plurality of locations of the intended recipient 22 may be determined. The plurality of locations may comprise at least a current location and one or more predicted future locations of the intended recipient 22. For example, it may be determined that the current location of the intended recipient 22 is the current location 23, and the one or more predicted future locations of the intended recipient 22 include the first predicted future location 24 and the second predicted future location 25. At operation 33, location feature data for one or more locations of the plurality of locations are determined. At operation 34, at least one message delivery location for the first message may be determined based, at least in part, on the location feature data and a message intent of the first message. The at least one message delivery location may be selected from the one or more current or predicted future locations of the intended recipient 22.

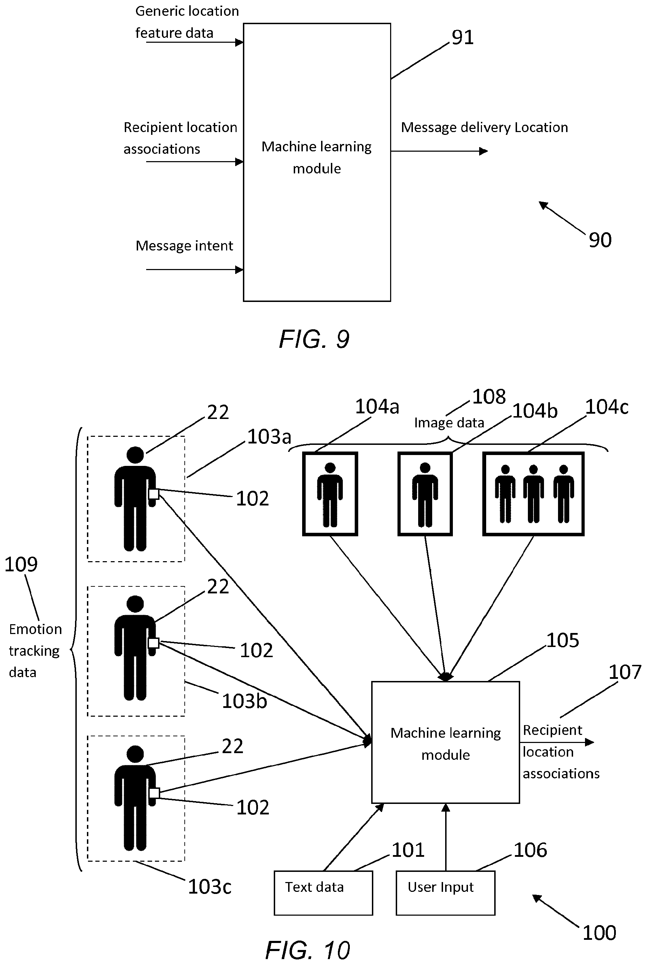

In an example embodiment, the location feature data may comprise at least one of recipient location associations and generic location feature data. The recipient location associations may comprise information regarding emotions or memories of the intended recipient 22 that are associated with at least some of the one or more current and predicted future locations. For example, the intended recipient 22 may generally feel stressed at work, and may generally feel relaxed at home. In other examples, the intended recipient 22 may feel happy or sad in a specific neighbourhood due to memories attached to that specific neighbourhood. Therefore, the recipient location associations may indicate how the intended recipient 22 feels at each of the current and predicted future locations. The recipient location associations may be learnt by collecting data from the intended recipient 22 over a period of time. This is discussed in further detail with respect to FIG. 10. The generic location feature data may comprise information regarding how people in general may feel at the current and predicted future locations. For example, in general, people may feel relaxed at home, stressed or busy at work, happy in a park, or sad in a hospital. The generic location feature data may be learnt from a generic dataset or by collecting data from a plurality of subjects over a period of time. This is discussed in further detail with respect to FIG. 10.

In an example embodiment, the selected at least one message delivery location may comprise a plurality of locations. For example, the at least one message delivery location may comprise a plurality of locations based on a nature of the message delivery location (for example, any railway station, any park, any house, any shopping mall, etc. regardless of the specific geographical location). For example, assume the at least one message delivery location is selected to be a supermarket. In such case, the first message may be delivered to the intended recipient 22 when the intended recipient 22 is in a supermarket, regardless of a geographical location of the supermarket. As such, the message delivery location may not be limited to be selected based on a geographical position or area of current and/or future predicted locations, such that the message delivery location may alternatively, or in addition, be selected based on the nature of the current and/or future predicted locations. In another example, the message delivery location may comprise a plurality of locations where the intended recipient 22 may feel relaxed (e.g. homely). For example, a first predicted future location of the intended recipient 22 is the home of the intended recipient 22, and a second predicted future location of the intended recipient is the home of his/her brother. The intended recipient 22 may feel relaxed at both the first and second predicted future locations (his/her home and his/her brother's home). As such, the at least one message delivery location comprises both the first and second predicted future locations. For example, the first message may be delivered to the intended recipient 22 in whichever location he/she arrives earlier.

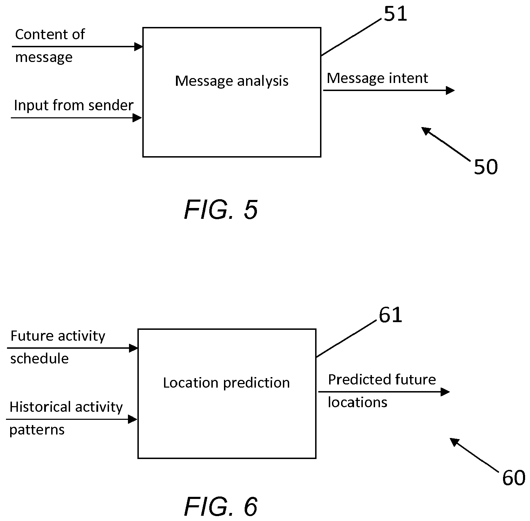

Example embodiments for determining the message intent, predicted future locations, and message delivery location are discussed in detail in FIGS. 5 to 9.

FIG. 4 is a flowchart of an algorithm, indicated generally by the reference numeral 40, in accordance with an example embodiment. Operations 31 to 34 are the same as the operations 31 to 34 described in FIG. 3. After the message delivery location is determined at operation 34, the first message may be delivered at operation 42 to the intended recipient 22 when the intended recipient is in the determined message delivery location. In an example embodiment, at an optional operation 41, a content of the first message may be altered before delivering the first message. The content of the first message may be altered based on the selected message delivery location. For example, the content may be altered to emphasize a message intent based on the location feature data of the selected message delivery location.

For example, assume that a first message with a message intent "urgent" is sent by the sender 21 to the intended recipient 22. A message delivery location may be selected to be a work location. If the first message is delivered to the intended recipient 22 while he/she is working at the work location, he/she may ignore the first message. It may be important that the message intent "urgent" is emphasized, such that the intended recipient does not ignore the first message. The first message may then be altered, such that the first message gets attention of the intended recipient 22, and the intended recipient 22 understands that the message intent of the first message is urgent. For example, the content of the first message originally contains the text "Can you call me? I tripped". The intended recipient 22 may not read the whole text in the work location, as he/she may be busy with work. The contents of message may be altered, for example, to contain the text "URGENT MESSAGE: Can you call me? I tripped". The altered text may emphasize the message intent, such that the intended recipient 22 understands the message intent. The intended recipient 22 is more likely to give attention to the first message with the altered text.

In an example embodiment, the sender 21 may specify one or more elements of a message that may be altered based on the selected message delivery location. For example, the sender 21 may send a message to one or more intended recipients with a text "I am always relieved when I get home and see "ELEMENT", where the message may be altered by replacing the text for the "ELEMENT" with text that may represent one or more aspects of one or more location feature data of a message delivery location selected for the one or more intended recipients. For example, a selected message delivery location for delivering the message to intended recipient 22 is a home of the intended recipient 22, and the location feature data (including generic location feature data and recipient location associations) comprise an aspect related to family. The text for "ELEMENT" is thus replaced with a text "family", such that the altered message reads as "I am always relieved when I get home and see *family*". If the message is sent to a plurality of intended recipients, the text for the "ELEMENT" may be replaced with different texts for the plurality of intended recipients, based on the location feature data of the different message delivery locations selected for the different intended recipients. For example, a selected message delivery location for delivering the message to another intended recipient is a kitchen of the intended recipient 22, and the location feature data (including generic location feature data and recipient location associations) comprise an aspect related to food. The text for "ELEMENT" is thus replaced with a text "food", such that the altered message reads as "I am always relieved when I get home and see *food*". Accordingly, the intended recipient 22 and the other intended recipient 22 may receive differently altered messages.

In an example embodiment, the altered message may be a message that is generated (for example, from a message seed) for an intended recipient based on location feature data of a selected message delivery location. For example, the sender 21 may define a message template for a desired message intent, and the message is generated based, at least in part, on the message template, and location feature data of the selected message delivery location of the intended recipient. As described above, the generated message may be different for different intended recipients, based on the different message delivery locations of the intended recipients. For example, a sender may send a message to a large number of recipients (for example, via social media), and may wish to alter the messages for each recipient based on the recipient's location and corresponding location feature data.

In another example, the sender may be on a holiday, and may send a message describing a tourist attraction to a plurality of intended recipients, where the message may comprise the text "This place is huge, even bigger than ELEMENT". The ELEMENT may be replaced with the intended recipient's location (the message delivery location). For example, if the intended recipient is in his garage, the message may be delivered with the text "This place is huge, even bigger than *your garage*".

In another example, the message may comprise the text "It is really hot in ELEMENT1, ELEMENT2 more than ELEMENT3". The ELEMENT1 may be replaced with the sender's location, ELEMENT2 may be replaced with a temperature difference between the sender's location and the intended recipient's location, and ELEMENT3 may be replaced with the intended recipient's message delivery location. If the intended recipient is in London, and the sender is in Munich, and the temperature difference is 10 degree Celcius, the message may be delivered with the text "It is really hot in Munich, 10 degree Celcius more than London".

In another example, the elements of the message that may be replaced may comprise one or more words or phrases. For example, the message may comprise the text "Wish you were here; ELEMENT", where the element may be replaced with a work greeting or a home greeting based on whether the intended recipient is at work or at home. The message may be delivered with the text "Wish you were here. *Don't work too hard!"* for one or more intended recipients in a work location. The message may be delivered with the text "Wish you were here. *Hope you're having fun with the family.*" For one or more intended recipients that are at home.

In another example embodiment, a message may comprise virtual reality (VR), augmented reality (AR), or mixed reality (MR) components. Such VR, AR, or MR components of the message may be altered based on the location feature data of selected message delivery locations, in order to make the components (for example, AR avatars) and/or interaction of the components more appropriate for the selected message delivery location. For example, clothing worn by an avatar may be based on the selected message delivery location. For example if an intended recipient is at a beach, the avatar in the message may be wearing beach shorts, and if an intended recipient is at a football match, the avatar may be wearing a clothing that matches team colours of one of the teams in the football batch.

FIG. 5 is a block diagram of a system, indicated generally by the reference numeral 50, in accordance with an example embodiment. System 50 comprises a message analysis module 51 for determining a message intent of a message, for example the first message. The message analysis module 51 may receive as input at least one of the content of the first message, and an intent input from the sender 21. At least one of those inputs may be optional, such that the message analysis module 51 may, in some embodiments, receive one or both of the content of the first message and the intent input from the sender 21. The intent input from the sender 21 may allow the sender to specify the message intent of the first message. The content of the message may be analysed using text, voice, and/or image recognition. The message analysis module 51 may provide, as an output, a message intent of the first message. The message intent may be the sender's desired intent for the first message. For example, the message intent may be a desired emotional intent, such as 'intended relaxing message', 'intended serious message', 'intended funny message', or the like. The message intent may alternatively, or in addition, be a desired contextual intent for invoking location related memories, such as 'family related', 'entertainment related', 'friends related', or the like.

As discussed above, the message intent may be determined from the message intent specified by the sender 21 in the intent input from the sender 21, or the message intent may be determined by analysing the content of the first message. The sender 21 may provide the intent input containing the message intent by selecting (e.g. at a user interface) one or more message intents from a list of a plurality of possible message intents. If the sender 21 is unable to find a suitable message intent for selection in the list of the possible message intents, the sender 21 may create a new possible message intent in the list.

Alternatively, or in addition, the content of the first message may be analysed in various ways, such as text recognition, voice recognition, image recognition, or the like. For example, the first message may be a text message containing bad news, such as someone falling ill or being in an accident. The message intent of the first message may be determined to be "intended serious and upsetting message". In another example, the first message may be a video message containing a video of a dance performance. The message intent of the first message may then be determined to be "entertainment related".

In an example embodiment, the message intent of the first message may comprise scores for a plurality of message attributes (such as seriousness, distress, urgency, romance, entertaining, amusing, etc.). The message may be parsed to determine scores of one or more keywords for one or more of the plurality of message attributes. Alternatively, or in addition, one or more keywords and/or one or more scores may be defined by the sender of the first message. For example, the scores may be defined by the sender manually by selecting message attributes and scores before sending the message, or may be defined by analysing facial expressions (e.g. crying, smiling, etc.), voice features (e.g. high pitch or excited voice, shaky or crying voice, etc.), and/or any other contextual data related to the sender. For example, if it is determined that the sender is crying, and there are ambulance sirens sound in the background, scores for the message attributes seriousness, distress, and urgency may be above a threshold score (high score), and scores for the message attributes romance, entertaining, amusing may be below a threshold (low score or almost zero score).

In an example embodiment, the message analysis module 51 may determine the message intent using natural language processing techniques (for example, when the first message is a text message). For example, a message intent of a message may be determined by extracting an emotional sentiment from the message and matching it with a message intent from a list of a plurality of possible message intents. If the emotional sentiment extracted from the message does not match with any possible message intents of the list, a new possible message intent may be created in the list.

FIG. 6 is a block diagram of a system, indicated generally by the reference numeral 60, in accordance with an example embodiment. System 60 comprises a location prediction module 61 for determining one or more predicted future locations of the intended recipient 22. A current location of the intended recipient 22 may be determined based on data from a location sensor of the intended recipient 22 (for example a global positioning system (GPS) sensor). The location prediction module 61 may receive as an input future activity schedule of the intended recipient 22 and/or historical activity patterns of the intended recipient 22. At least one of the inputs may be optional, such that the location prediction module 61 may receive one or both of the future activity schedule and the historical activity patterns. The location prediction module 61 then determines one or more predicted future locations of the intended recipient 22 based, at least one of the future activity schedule and the historical activity patterns of the intended recipient 22. In an example embodiment, the predicted future locations may be determined based on known locations that the intended recipient 22 is predicted to be in. For example, the intended recipient 22 may have defined a first geographical location to be a home location, and a second geographical location to be a work location. The message delivery system may therefore predict the first and second geographical locations to be one of the predicted future locations (as the intended recipient 22 is predicted to be in the home location and the work location almost regularly). Therefore, the prediction may only be required to determine that the intended recipient 22 will be in one of the first and second geographical locations, and the prediction may not be required to determine whether the first and second geographical locations are work or home locations (as this is already defined by the intended recipient 22). In another example embodiment, determining the predicted future locations may comprise determining the nature (e.g. location feature data) of one or more geographical locations corresponding to a current location or to one or more predicted future locations.

For example, with reference to FIG. 2, a future activity schedule (such as a personal and/or work calendar) may indicate that the intended recipient 22 has a work meeting at a time T2, and has no entries for time T3. Historical activity patterns of the intended recipient 22 may indicate activities of the intended recipient 22 at times T2 and T3 of previous days in general. For example, the historical activity patterns may indicate that the intended recipient 22 is usually at work at the time T2 and the intended recipient 22 is usually at home at time T3. It may then be determined that a first predicted future location for the intended recipient 22 at time T2 is a work location, and that a second predicted future location for the intended recipient 22 at time T3 is home.

In another example, the future activity schedule may indicate that the intended recipient 22 has a work meeting at time T2, has no entries for time T3, and has a dinner reservation after time T3 (for example at a later time T4, not shown in FIG. 2, where time T4 is after time T3). Even though historical activity patterns of the intended recipient 22 indicates that the intended recipient 22 is usually at home at time T3, the dinner reservation at time T4 may indicate that the intended recipient 22 may not be at home at T3. For example, the intended recipient 22 may be driving from the work location to the restaurant of the dinner reservation around time T3. It may then be determined that a first predicted future location for the intended recipient 22 at time T2 is a work location, and that a second predicted future location for the intended recipient 22 at time T3 is a car (on the move).

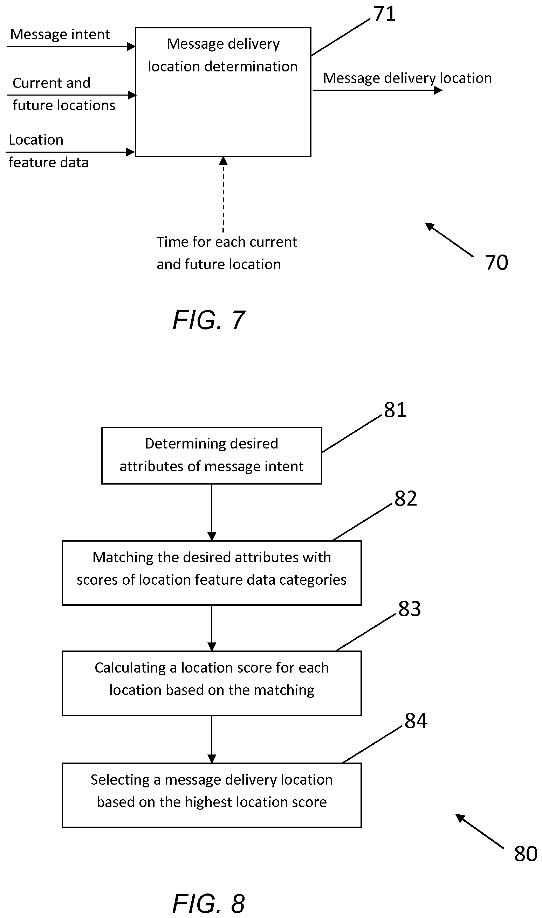

FIG. 7 is a block diagram of a system, indicated generally by the reference numeral 70, in accordance with an example embodiment. System 70 comprises a message delivery location determination module 71 for determining a message delivery location for the first message based on message intent and location feature data of the current and predicted future locations. The message delivery location determination module 71 receives as inputs the determined message intent, the determined current and predicted future locations, and the determined location feature data for each of the current and predicted future locations. The message delivery location determination module 71 may also optionally receive as input one or more time periods at which the intended recipient 22 is expected to be at the predicted future locations. The message delivery location determination module 71 then determines a message delivery location based on one or more of the received inputs. In example embodiments, one or more of the inputs to the system 70 may be omitted.

In an example embodiment, the location feature data may comprise one or more categories, and each location may have scores for the one or more categories. The categories may be, for example, "relaxing", "stressful", "work related", "happy memories", "sad memories", "requires focussing", or any other categories for describing a recipient location associations. In one example, a living room may have a score of 9 (on a scale of 10) for the category "relaxing", and may have a score of 1 (on a scale of 10) for "work related". The scores in each category may be based on data from a plurality of people (generic location feature data) and/or based on data from the intended recipient 22 (recipient location associations). The scores may further be based on past memories of the intended recipient, which score may be included in the recipient location associations. Based on the intended recipient's past memories, a living room may have a high or low score for "happy memories" or "sad memories". In one example, the location feature data may be a weighted average of the generic location feature data and the recipient location associations.

For example, with reference to FIG. 2, a message intent is determined to be "intended serious and upsetting message"; a current location 23, at time T1, is determined to be a car (or road, i.e. driving); a first predicted future location 24, at time T2, is determined to be a work location; a second predicted future location 25, at time T3, is determined to be the home of the intended recipient 22; a location feature data of the current location 23 (car) is determined to be 'focussed' or 'unavailable'; a location feature data of the first predicted future location 24 (work) is determined to be 'stressed' or 'busy'; a location feature data of the second predicted future location 25 (home) is determined to be 'relaxed'. Based on the inputs, the message delivery location may be determined to be the second predicted future location (home). For example, it may be dangerous for the intended recipient 22 to receive a message that is upsetting while he or she is driving, as the focus on driving may be disturbed. It may also not be good for the intended recipient 22 to receive an upsetting message at work or during a meeting. Therefore, as the intended recipient 22 is most relaxed at home, i.e. at the current location 23, the message is delivered when the intended recipient 22 is at home at time T3.

In an example embodiment, determining the message delivery location is further based on times at which the intended recipient 22 is predicted to be at the one or more current or predicted future locations. For example, a location at which the intended recipient arrives at an earlier time may be selected, even if another location (at which the intended recipient 22 arrives later) may be more suitable as the message delivery location. In the above example, the intended recipient 22 is at the current location 23 (car) at an earliest time (T1), the first predicted future location 24 (work) at a later time (T2), and the second predicted future location 25 (home, and most suitable) at a latest time (T3). As it is preferred to select a location at which the intended recipient arrives at an earlier time, the current location 23 (car) may be selected as the message delivery location. Alternatively, or in addition, the message delivery location may be selected based on weighted parameters, for example, partly based on the suitability of the location, and partly based on the time at which the intended recipient 22 is at the location. For example, the suitability of the current location 23 (car) for delivering an upsetting message is very low (as it may be very dangerous), but the time of the current location 23 (car) is the earliest; the suitability of the first predicted future location 24 (work) may be medium (it may not be appropriate, but it is not dangerous), and the time of the first predicted future location 24 may be medium (later than T1, but earlier than T3); the suitability of the second predicted future location 25 (home) may be high, but the time of the second predicted future location 25 is the latest (later than T1 and T2). Based on the above, the weighted parameters may indicate that the first predicted location 24 (work) should be selected as the message delivery location. Of course, in different circumstances, the relative weighting may be different, such that a different location is selected by the module 71.

FIG. 8 is a flowchart of an algorithm, indicated generally by the reference numeral 80, in accordance with an example embodiment. The operations of the algorithm 80 may be performed at the message delivery location determination module 71 of the system 70. As shown in the system 70, the message delivery location determination module 71 receives as inputs a message intent, one or more current and future locations, and location feature data of the one or more current and future locations.

At operation 81, one or more desired location attributes of a message intent are determined. For example, if a desired location attribute may be a "relaxing location" for a message with "upsetting" message intent.

At operation 82, the desired location attributes are matched with scores of location feature data categories. For example, location feature data of a current location shows that the current location has a score of 2 (on a scale of 10) for category "relaxing", and a score of 8 (on a scale of 10) for category "stressful"; location feature data of a first predicted future location shows that the current location has a score of 5 (on a scale of 10) for category "relaxing", and a score of 5 (on a scale of 10) for category "stressful"; location feature data of a second predicted future location shows that the current location has a score of 9 (on a scale of 10) for category "relaxing", and a score of 2 (on a scale of 10) for category "stressful". As the desired location attribute is "relaxing", the scores for the category "relaxing" are compared.

At operation 83, a location score is calculated for each location based on the matching. For example, since the second predicted future location has the highest score for the "relaxing" category, and the lowest score for the "stressful" category, the location score of the first predicted future location may be the highest. In one example embodiment, the location score may further be based on a time of arrival at which the intended recipient 22 is predicted to arrive at the location. For example, since the intended recipient 22 arrives at the first predicted future location earlier than the second predicted future location, the location score (based on the score in "relaxing" category, and the time of arrival) of the first predicted future location may become higher than the location score of the second predicted future location. Other factors may also be considered in some embodiments.

At operation 84, a message delivery location may be selected based on the highest location score. For example, if the first predicted future location has the highest location score (calculated in operation 83), the first predicted future location may be selected as the message delivery location. If the second predicted future location has the highest location score (calculated in operation 83), the second predicted future location is selected as the message delivery location.

In an example, the message delivery location determination module 71 may not receive location feature data for one or more of the current and future locations. For example, the intended recipient may be or may be predicted to be at a location where the intended recipient has not been before or there may be no location feature data saved for that location, or not enough location feature data. Alternatively, or in addition, location feature data, including generic location feature data and recipient location associations, for one or more locations may change over time. For example, a location with a "neutral" location feature data may become a location with a "fearful" location feature data if a crime happens in that location. In another example, the recipient location association of the intended recipient may change from "neutral" to "happy" if the intended recipient spends a happy time at the location, and makes some happy memories.

In an example embodiment, the location feature data may be updated at the message delivery apparatus 26. For example, the location feature data may be updated periodically, in order to take into account any changes in the emotions or memories (for example of the intended recipient 22 or a plurality of people in general) associated a location. Alternatively, or in addition, the recipient location associations may be updated based on inputs from the intended recipient 22 indicating a change in recipient location associations, or based on changes in emotion tracking data, image data, or text data related to the intended recipient 22. The generic location feature data may be updated based on events from the news, or based on inputs, emotion tracking data, image data, or text data from a plurality of people in general.

In an example embodiment, the location feature data may be updated and the message delivery location may be determined using a machine learning module. The machine learning module may be comprised within the message delivery apparatus, and may be trained by collecting data related to that location, and the machine learning module may be further updated during use of the message delivery apparatus.

FIG. 9 is a block diagram of a system, indicated generally by the reference numeral 90, in accordance with an example embodiment. System 90 comprises a machine learning module 91. In the example embodiment, the message delivery location may be determined using the machine learning module 91. The machine learning module 91 may receive as inputs a message intent (for example, determined in system 50), and location feature data (such as generic location data and recipient location associations) for one or more of the current and predicted future locations. The machine learning module 91 may provide as an output a message delivery location based on the inputs.

FIG. 10 is a block diagram of a system, indicated generally by the reference numeral 100, in accordance with an example embodiment. System 100 comprises a machine learning module 105 (similar to machine learning module 91).

In an example embodiment, the machine learning module 105 may be trained for determining recipient location associations 107 of an intended recipient 22 based on various inputs, such as one or more of text inputs 101, user inputs 106, emotion tracking data 109, and image data 108. It will be appreciated that the machine learning module 105 may be trained with one or more of the various inputs, such that some inputs may be optional. However, the training of the machine learning module 105 may be more accurate if a large number of data is used for training.

User inputs 106 may comprise information provided by the intended recipient 22 regarding recipient location associations corresponding to a plurality of locations, for example, how the intended recipient 22 feels at the plurality of locations. For example, the recipient location associations may comprise one or more categories, and each location may have scores for the one or more categories. The scores for one or more categories may be specified in the user inputs 106. The categories may be, for example, "relaxing", "stressful", "work related", "happy memories", "sad memories", "requires focussing", or any other categories for describing a recipient location associations. In one example, a living room may have score of 9 (on a scale of 10) for the category "relaxing", and may have 1 (on a scale of 10) for "work related". Based on the intended recipient's past memories, a living room may have a high or low score for "happy memories" or "sad memories".

Emotion tracking data 109 may comprise data obtained from an emotion tracking device 102 worn by the intended recipient 22 at a plurality of locations, such as a plurality of locations 103a, 103b, and 103c. In an example embodiment, the emotion tracking device 102 may comprise one or more sensors, such as visual sensor(s), auditory sensor(s), infrared sensor(s), heart rate monitor(s), accelerometer(s), electrodermal sensor(s), electroencephalogram (EEG) sensor(s), optical coherence tomography (OCT) sensor(s), electrocardiography (ECG) sensor(s), photoplethysmography (PPG) sensor(s), or breath sensor(s). The variety of sensor types may be used for tracking emotions of the intended recipient 22. Visual sensors (if provided) may include a camera, such that visual indicators of the intended recipient 22 may be recorded. The visual indicators may include, for example, one or more of facial expressions, body movements or body positions. Auditory sensor(s) (if provided) may include sound recorders, such that auditory indicators of the intended recipient 22 may be recorded. The auditory indicators may include, for example, changes in the voice or tone of the intended recipient 22. Infrared sensors may also be used for determining facial emotional patters, finger temperature, skin temperature, and the like. Electrodermal sensor(s) may be used for determining electrical variations of the skin. Electrocardiography (ECG) sensor(s) may be used for determining variations in heart rate of the intended recipient 22. The skilled person will be aware of many other sensor types that could be used.

Image data 108 may comprise a plurality of images 104a, 104b, and 104c of the intended recipient 22. The locations of the intended recipient 22 and corresponding emotions or memories (for example, from facial expressions, or from the surrounding people, i.e. family or friends) associated with the locations in each of the plurality of images 104a, 104b, and 104c may be determined for training the machine learning module 105. For example, image data may be obtained in real time (for example, during a video call, or a live a video capturing and uploading), or may be obtained from stored image data (for example, from social media accounts, images stored in a personal device, images stored in a cloud, or the like). Emotional data or contextual data (corresponding to emotions or memories of the intended recipient 22) may be obtained using image processing algorithms on the image data. The emotional data and the contextual data may then be used for determining recipient location associations 107 of the intended recipient 22 for one or more locations.

Text data 101 may comprise text messages, journal entries, articles, social media entries, or any other text data that may comprise information of the emotions or memories of the intended recipient 22. Emotional data or contextual data (corresponding to emotions or memories of the intended recipient 22) may be obtained using text processing algorithms on the text data 101. The emotional data and the contextual data may then be used for determining recipient location associations 107 of the intended recipient 22 for one or more locations.

The machine learning module 105 may use a combination of one or more of the image data 108, user input 106, emotion tracking data 109, and text data 101 for determining recipient location associations 107. The machine learning module 105 may be pre-trained by collecting data from the intended recipient 22 over a period of time, and/or collecting data from a plurality of people (such that the number of subjects is higher, and the data is more versatile). The machine learning module 105 may also be trained in real time during the use of the machine learning module 105. For example, when a message is sent by the sender 21, the machine learning module 105 may be trained based on the emotions of the intended recipient after receiving the message.

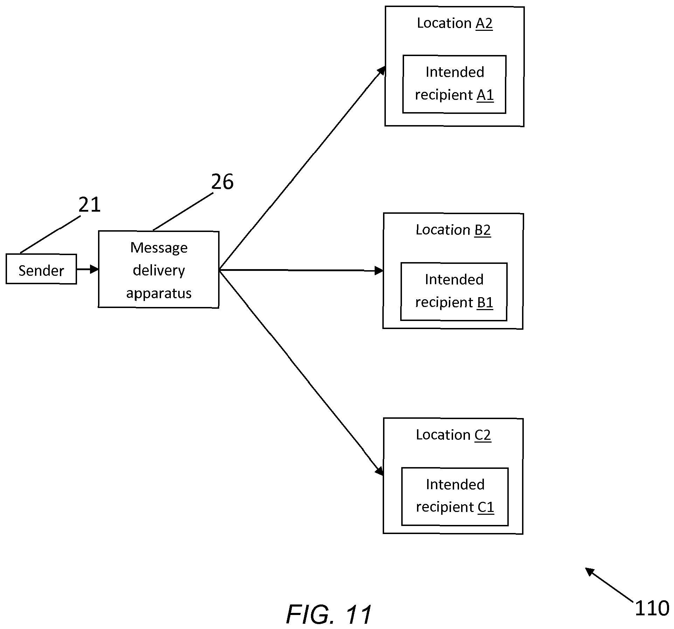

FIG. 11 is a block diagram of a system, indicated generally by the reference numeral 110, in accordance with an example embodiment. The message delivery apparatus 26 (similar to the message delivery apparatus of FIG. 2) may be used for delivering messages to a plurality of intended recipients, such as intended recipients A1, B1 and Ci, as specified by the sender 21. The selected message delivery location may be different for the plurality of intended recipients, as the message delivery location may be determined separately (using algorithms 30, 40, and 80, and systems 20, 50, 60, 70, 90, and 100). For example, a message delivery location selected for the intended recipient A1 may be a location A2, a message delivery location selected for the intended recipient B1 may be a location B2, a message delivery location selected for the intended recipient C1 may be a location C2. The time of delivery of the message may also be different for the plurality of intended recipients, depending on the time at which the intended recipients arrive at the selected message delivery locations. Therefore, the message may be delivered to the intended recipient A1 at a time at which the intended recipient is at location A2; the message may be delivered to the intended recipient B1 at a time at which the intended recipient is at location B2; the message may be delivered to the intended recipient C1 at a time at which the intended recipient is at location C2. Alternatively, or in addition, one or more of the intended recipients may receive the message when the sender 21 sends the message, such that the algorithms and systems described above may only be used for some of the plurality of intended recipients.

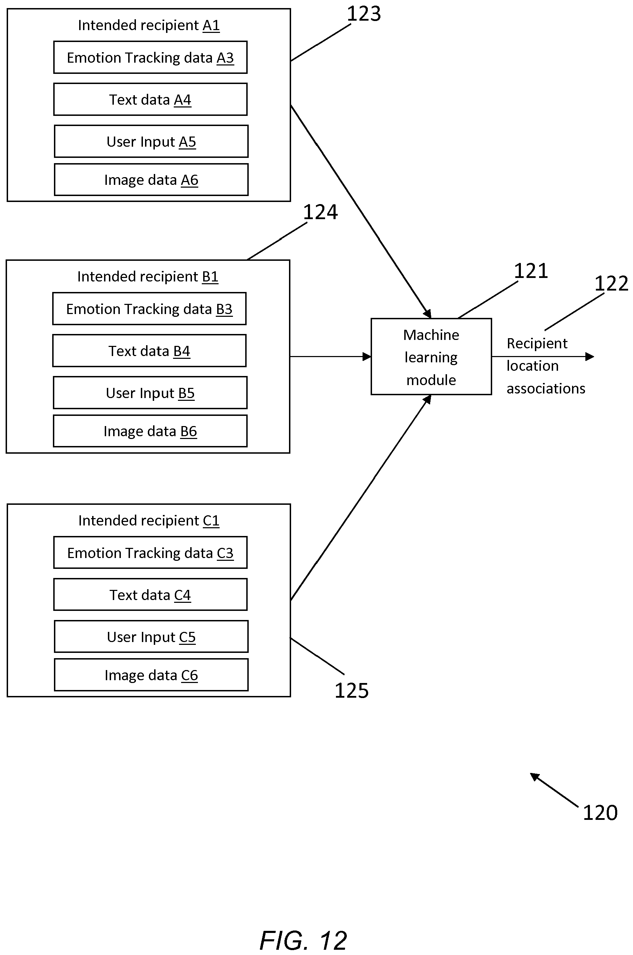

FIG. 12 is a block diagram of a system, indicated generally by the reference numeral 120, in accordance with an example embodiment. A machine learning module 121 (similar to the machine learning module 105 of system 100) may be trained with data from a plurality of intended recipients, such as the intended recipients A1, B1, and C1. For example, data 123 from the intended recipient A1, which data is provided as an input to the machine learning module, may include one or more of emotion tracking data A3, text data A4, user input A5, image data A6; data 124 from the intended recipient B1, which data is provided as an input to the machine learning module, may include one or more of emotion tracking data B3, text data B4, user input B5, image data B6; and data 125 from the intended recipient C1, which data is provided as an input to the machine learning module, may include one or more of emotion tracking data C3, text data C4, user input C5, image data C6. The machine learning module 121 may then be used for determining recipient location associations of one or more of the intended recipients A1, B1, and C1, corresponding to one or more locations. The training of the machine learning module 121 may be performed for one or more of the intended recipients A1, B1, and C1, using similar techniques as the techniques described with respect to FIG. 10. It will be appreciated that the machine learning module 121 may be trained with one or more of the various inputs from one or more of the intended recipients, such that some inputs may be optional. However, the training of the machine learning module 121 may be more accurate if a large number of data is used for training. If data from a large number of intended recipients is provided to the machine learning module 121, the machine learning module 121 may further me used for determining generic location feature data in addition to, or alternative to the recipient location associations 122.

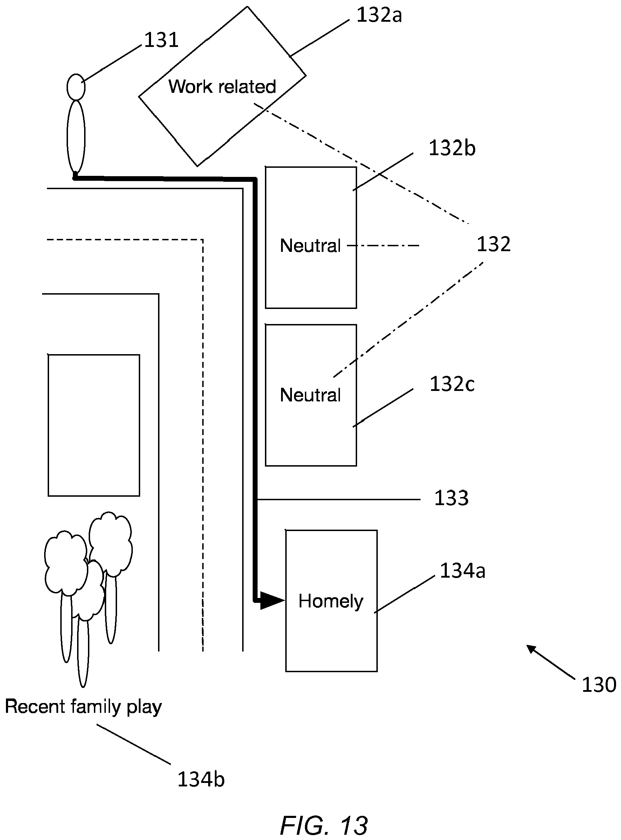

FIG. 13 is a block diagram of a system, indicated generally by the reference numeral 130, in accordance with an example embodiment. System 130 shows an intended recipient 131, moving (for example, walking) along a route 133. The route 133 comprises a first location 132a, a second location 132b and a third location 132c. The locations 132 may have associated generic location feature data. For example, as indicated in FIG. 13, the location feature data of the first location 132a may be "work related", the location feature data of the second location 132b may be "neutral", and the location feature data of the third location 132c may be "neutral". The route 133 further comprises a fourth location 134a, and a fifth location 134b. The locations 134 may have recipient location associations of the intended recipient 131, i.e. related to emotions or memories of the intended recipient 131. For example, as indicated in FIG. 13, the location feature data of the fourth location 132d may be "homely", and the location feature data of the fifth location 134b may be "family related" (e.g. the intended recipient 131 may have happy memories with family in the fifth location 134b). When a message is sent to the intended recipient 131, the message may be delivered while the intended recipient 131 is moving through the route 133 in any one of the locations 132 and 134, depending on the message intent and the location feature data.

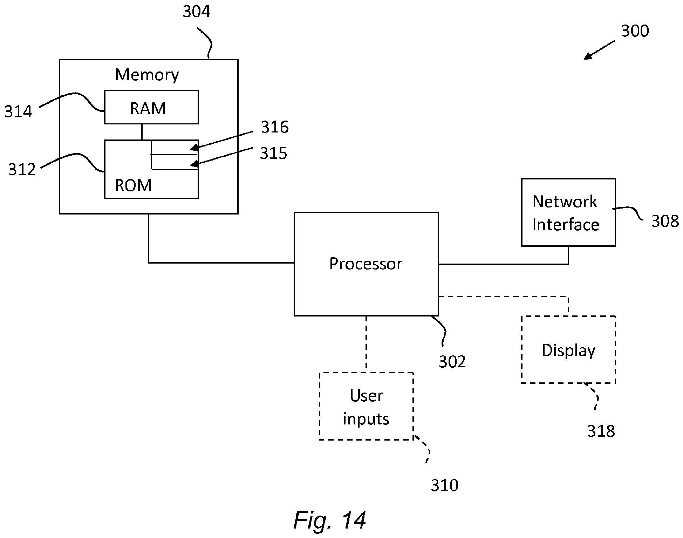

For completeness, FIG. 14 is a schematic diagram of components of one or more of the modules for implementing the algorithms described above, which hereafter are referred to generically as processing systems 300. A processing system 300 may have a processor 302, a memory 304 coupled to the processor and comprised of a RAM 314 and ROM 312, and, optionally, viewer inputs 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor, implements aspects of the algorithms 30, 40 and 80.

The processor 302 may take any suitable form. For instance, it may be a microcontroller, plural microcontrollers, a processor, or plural processors. Processor 302 may comprise processor circuitry.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

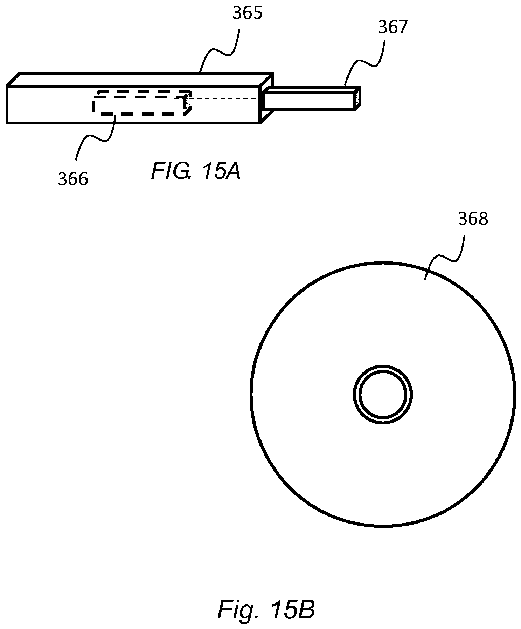

FIG. 15A and FIG. 15B show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 3, 4 and 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for receiving a first message, wherein the first message is sent by a sender to a recipient;
means for determining a plurality of locations of the intended recipient, wherein the plurality of locations comprise at least a current location and one or more predicted future locations of the recipient;
means for obtaining location feature data for one or more locations of the plurality of locations of the recipient; and
means for determining at least one message delivery location for the first message based on at least a message intent of the first message and the location feature data, wherein the at least one message delivery location is selected from the plurality of locations of the recipient.

2. An apparatus as claimed in claim 1, further comprising means for delivering the first message to the intended recipient when the recipient is at one of the at least one determined message delivery location.

3. An apparatus as claimed in claim 1 or claim 2, wherein the message intent is determined, at least in part, based on an intent input from the sender.

4. An apparatus as claimed in any one of claims 1 to 3, wherein the message intent is determined, at least in part, based on a content of the first message.

5. An apparatus as claimed in any one of the preceding claims, wherein the location feature data comprises at least one of the one or more recipient location associations or eneric location feature data.

6. An apparatus as claimed in any one of the preceding claims, further comprising means for updating said location feature data.

7. An apparatus as claimed in any one of the preceding claims, wherein the message delivery location is determined using a machine learning algorithm.

8. An apparatus as claimed in any one of the preceding claims, wherein the predicted future locations of the recipient are determined, at least in part, based on a future activity schedule for said recipient.

9. An apparatus as claimed in any one of the preceding claims, wherein the predicted future locations of the recipient are determined, at least in part, based on historical activity patterns of said recipient.

10. An apparatus as claimed in any one of the preceding claims, wherein the means for determining the message delivery location is configured to determine the message delivery location based, at least in part, on times at which the recipient is predicted to be at least some of said one or plurality of locations of the recipient

11. An apparatus as claimed in any one of the preceding claims, further comprising means for altering a content of the first message based at least on the determined at least one message delivery location.

12. An apparatus as claimed in any one of the preceding claims, wherein the means comprise:
at least one processor; and
at least one memory including computer program code, the at least one memory and the computer program configured, with the at least one processor, to cause the performance of the method of claim 13.

13. A method comprising:
receiving a first message, wherein the first message is sent by a sender to a recipient;
determining a plurality of locations of the intended recipient, wherein the plurality of locations comprise at least a current location and one or more predicted future locations of the recipient;
obtaining location feature data for one or more locations of the plurality of locations of the recipient; and
determining at least one message delivery location for the first message based on at least a message intent of the first message and the location feature data, wherein the at least one message delivery location is selected from the plurality of locations of the recipient.

14. A method as claimed in claim 13, further comprising delivering the first message to the intended recipient when the intended recipient is in one of the at least one determined message delivery location.

15. A computer program comprising instructions for causing an apparatus to perform at least the following:
receive a first message, wherein the first message is sent by a sender to a recipient;
determine a plurality of locations of the intended recipient, wherein the plurality of locations comprise at least a current location and one or more predicted future locations of the recipient;
obtain location feature data for one or more locations of the plurality of locations of the recipient; and
determine at least one message delivery location for the first message based on at least a message intent of the first message and the location feature data, wherein the at least one message delivery location is selected from the plurality of locations of the recipient.
